# EUROPEAN PATENT APPLICATION

(11) **EP 3 383 050 A1**
(43) Date of publication of application: **03.10.2018**
(21) Application number: 18156912.0
(22) Date of filing: 15.02.2018
(51) Int. Cl.: H04N 21/2368, H04N 21/236, H04N 21/24, H04N 21/8547, H04N 21/643, H04N 21/2362

(54) **PROGRAM, APPARATUS AND METHOD FOR ABNORMALITY DETECTION OF AN ENCODER MULTIMEDIA**

(30) Priority: 28.03.2017 JP 2017063838
(71) Applicant: FUJITSU LIMITED, Kanagawa 211-8588 (JP)
(72) Inventor: Ishikawa, Shotaro, Kanagawa, 211-8588 (JP); Umemoto, Yasutaka, Kanagawa, 211-8588 (JP)
(74) Representative: Hoffmann Eitle

(57) **Abstract**

A method for detecting abnormality of an encoder includes: executing an acquisition process for acquiring multiplexed data from the encoder that multiplexes encoded data obtained by performing an encoding process for multimedia data including moving picture data and audio data, and outputting the multiplexed encoded data; executing a first detection process for detecting, based on a packet identifier included in each of packets included in the acquired multiplexed data, at least either one of first packet corresponding to the moving picture data and second packet corresponding to the audio data from the multiplexed data; and executing a second detection process for detecting an abnormality of the encoder depending upon whether or not a detection number corresponds to a predetermined number, the detection number indicating at least either one of the number of times of the detecting the first packet and the number of times of the detecting the second packet.

## Description

### FIELD

The embodiments discussed herein are related to an abnormality detection program, an abnormality detection apparatus and an abnormality detection method.

### BACKGROUND

An encoder device encodes, for example, moving picture data and audio data and outputs the encoded moving picture data and audio data to an opposed apparatus. Then, a decoder device of the opposed apparatus decodes the received moving picture data and audio data to obtain output data and decides based on the output data whether or not the data suffers from missing, for example, from an abnormality.

### SUMMARY

### TECHNICAL PROBLEM

However, since the decoder device decides whether or not the data suffers from an abnormality based on the decoded output data, it is difficult to specify whether a cause of the abnormality resides in the encoder device side or the decoder device side. Accordingly, it is demanded to specify whether a cause of the abnormality resides in the encoder device side or the decoder device side.

According to one aspect of the present disclosure, provided are technologies for detecting an abnormality of an encoder.

### SOLUTION TO PROBLEM

According to an aspect of the embodiment, a method for detecting abnormality of an encoder includes: executing, by a processor of a computer, an acquisition process that includes acquiring multiplexed data from the encoder that multiplexes encoded data obtained by performing an encoding process for multimedia data which includes moving picture data and audio data, and outputting the multiplexed encoded data; executing, by the processor of the computer, a first detection process that includes detecting, based on a packet identifier included in each of packets included in the acquired multiplexed data, at least either one of first packet corresponding to the moving picture data and second packet corresponding to the audio data from the multiplexed data; and executing, by the processor of the computer, a second detection process that includes detecting an abnormality of the encoder depending upon whether or not a detection number corresponds to a predetermined number according to setting of the encoder, wherein the detection number indicates at least either one of the number of times of the detecting the first packet and the number of times of the detecting the second packet.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### ADVANTAGEOUS EFFECTS OF INVENTION

According to an aspect of the present disclosure, technologies for detecting an abnormality of an encoder are improved.

### BRIEF DESCRIPTION OF DRAWINGS

FIG. 1 is a block diagram depicting an example of a video distribution system of an embodiment;
FIG. 2 is a block diagram depicting an example of an encoder device;
FIG. 3 is an explanatory view depicting an example of a counter table;
FIG. 4 is an explanatory view depicting an example of multiplexed data when an encoder device is normal;
FIG. 5 is an explanatory view depicting an example of multiplexed data when an encoder device is abnormal;
FIG. 6 is a flow chart depicting an example of processing operation of an encoder device relating to an abnormality detection process; and
FIG. 7 is a block diagram depicting an example of an information processing apparatus that executes an abnormality detection program.

### DESCRIPTION OF EMBODIMENTS

In the related art mentioned above, since the decoder device decides whether or not the data suffers from an abnormality based on the decoded output data, it is difficult to specify whether a cause of the abnormality resides in the encoder device side or the decoder device side. Accordingly, it is demanded to specify whether a cause of the abnormality resides in the encoder device side or the decoder device side.

According to an aspect of the present disclosure, provided are technologies for detecting an abnormality of an encoder.

In the following, embodiments of an abnormality detection program, an abnormality detection apparatus and an abnormality detection method disclosed herein are described in detail based on the drawings. It is to be noted that the disclosed technology shall not be restricted by the embodiments. Further, the embodiments described below may be combined suitably to the extent that no inconsistency occurs.

### [Embodiments]

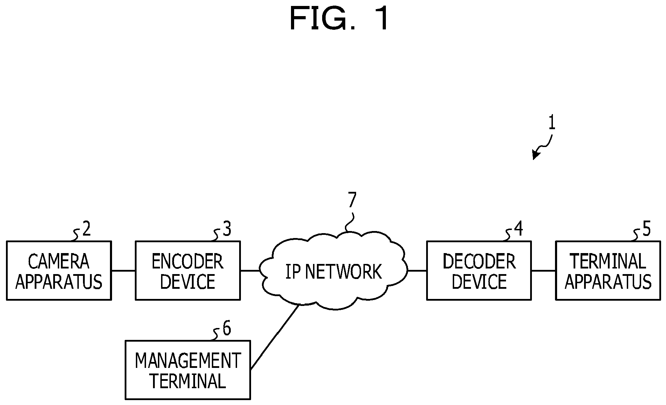

FIG. 1 is a block diagram depicting an example of a video distribution system of an embodiment. A video distribution system 1 depicted in FIG. 1 includes a camera apparatus 2, an encoder device 3, a decoder device 4, a terminal apparatus 5, a management terminal 6 and an Internet protocol (IP) network 7. The camera apparatus 2 picks up an image, for example, of an image pickup object to acquire video data and audio data. The encoder device 3 encodes the video data and the audio data, converts the encoded video data and audio data into IP packets and distributes the IP packets to the IP network 7.

The decoder device 4 demultiplexes the IP packets received from the IP network 7 into video data and audio data and decodes the video data and the audio data. The terminal apparatus 5 is a terminal that has built therein a function for displaying and outputting the video data and the audio data decoded by the decoder device 4. The management terminal 6 is a terminal for maintaining and managing the video distribution system 1.

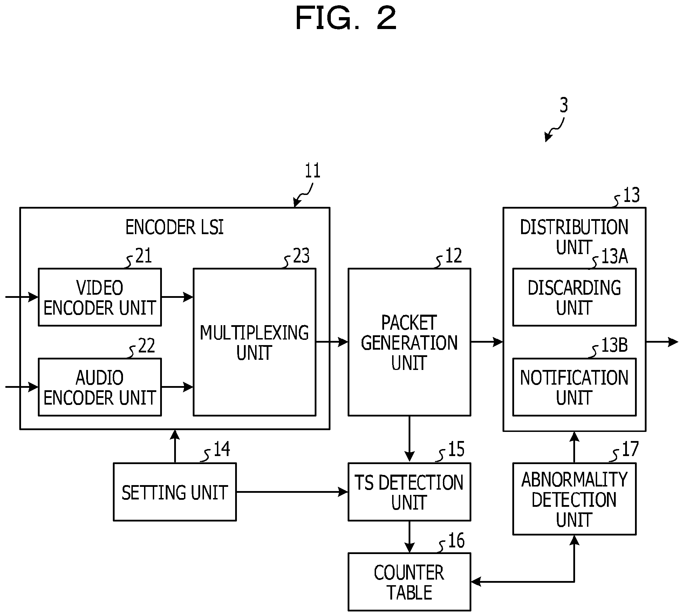

FIG. 2 is a block diagram depicting an example of an encoder device. The encoder device depicted in FIG. 2 may be the encoder device 3 depicted in FIG. 1. The encoder device 3 depicted in FIG. 2 includes an encoder (large scale integration (LSI) 11, a packet generation unit 12, a distribution unit 13, a setting unit 14, a transport stream (TS) detection unit 15, a counter table 16 and an abnormality detection unit 17.

The encoder LSI 11 includes a video encoder unit 21, an audio encoder unit 22, and a multiplexing unit 23. The video encoder unit 21 encodes video data from the camera apparatus 2 to generate a video elementary stream (ES). The audio encoder unit 22 encodes audio data from the camera apparatus 2 to generate an audio ES. The multiplexing unit 23 converts the video ES into a video transport stream (TS) and converts the audio ES into an audio TS. Further, the multiplexing unit 23 multiplexes the video TS, audio TS and so forth into multiplexed data and outputs the multiplexed data in a unit of a TS. It is to be noted that the TS forms a stream by a series of packets of a fixed length of 188 bytes. A TS packet includes a packet identifier (PID) for identifying the TS packet. Further, the multiplexing unit 23 generates a program association table (PAT) TS and a program map table (PMT) TS. It is to be noted that the PAT is control data such as a table in which programs in the TS are placed in a list of PIDs of PMT. The PMP is control data such as a table in which PIDs of images, sounds and so forth of a certain program are placed.

The packet generation unit 12 adds an IP header to multiplexed data of an audio TS and a video TS and encapsulates the multiplexed data to generate an IP packet. The distribution unit 13 distributes the IP packet to the IP network 7. The multiplex data may be divided, for example, in a unit of a TS packet of 188 bytes. Since each TS packet has an added header of 4 bytes, data may be converted into TS packets by being divided in a unit of 184 bytes.

The setting unit 14 sets a bit rate and a TS size for the video encoder unit 21 and the audio encoder unit 22. The TS detection unit 15 acquires a PID in a multiplexed data in the packet generation unit 12 and counts the video TS, audio TS, PAT TS and PMT TS from the multiplexed data based on the PID. Further, the TS detection unit 15 stores the count values of the video TS, audio TS, PAT TS and PMT TS into the counter table 16.

In the TS detection unit 15, when the set bit rate for video data is 10 Mbps, since 10 Mbps/8 = 1250000 bps/184 = 6793.4..., for example, the scheduled value for one second of the video TS is approximately 6793. Note that it is assumed that the scheduled value of the video TS is stored in a storage unit not depicted. Further, in the TS detection unit 15, when the set bit rate of the audio data is 256 kbps, since 256 kbps/8 = 32000 bps/184 = 173.9..., for example, the scheduled value of the audio TS for one second is approximately 173. Note that it is assumed that the scheduled value of the audio TS is stored in the storage unit not depicted.

Since the TS detection unit 15 outputs in a period of, for example, 100 milliseconds with a PAT size of, for example, 25 bytes, one PAT size is equal to or smaller than 184 bytes, for example, fits in one TS packet. Since one TS packet arrives in a period of 100 milliseconds, the scheduled value of the PAT TS for one second is 10. Note that it is assumed that the scheduled value of the PAT TS is stored in the storage unit not depicted.

Since the TS detection unit 15 outputs in a period of, for example, 70 milliseconds with a PMT size of, for example, 200 bytes, because 200/184 = 1.086..., one PMT corresponds to 2 TS packets. Since one second/70 milliseconds = 14.2..., for example, since the TS detection unit 15 outputs a PMT by 14 times for one second, 2 TS packets are outputted every time, and therefore, the scheduled value per one second of the PMT TS is 28. Note that it is assumed that the scheduled value of the PMT TS is stored in the storage unit not depicted.

The abnormality detection unit 17 decides whether or not the count value of the video TS at present is lower than a set value obtained by adding a scheduled value of the video TS one second after to the video TS count value one second before. If the video TS count value at present is lower than the set value, the abnormality detection unit 17 detects an encode abnormality. The abnormality detection unit 17 decides whether or not the count value of the audio TS at present is lower than a set value obtained by adding a scheduled value of the audio TS one second after to the audio TS count value one second before. If the audio TS count value at present is lower than the set value, the abnormality detection unit 17 detects an encode abnormality. The abnormality detection unit 17 decides whether or not the PAT TS count value at present is lower than a set value obtained by adding a scheduled value of the PAT TS count value one second after to the PAT TS count value one second before. If the PAT TS count value at present is lower than the set value, the abnormality detection unit 17 detects an encode abnormality. The abnormality detection unit 17 decides whether or not the PMT TS count value at present is lower than a set value obtained by adding a scheduled value of the PMT TS count value one second after to the PMT TS count value one second before. If the PMT TS count value at present is lower than the set value, the abnormality detection unit 17 detects an encode abnormality.

The distribution unit 13 includes a discarding unit 13A and a notification unit 13B. If the discarding unit 13A detects an encode abnormality, it discards the IP packet of the multiplexed data. If an encode abnormality is detected, the notification unit 13B notifies the management terminal 6 of an abnormality warning.

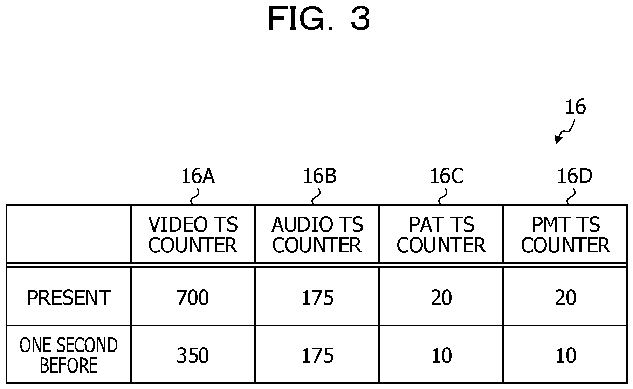

FIG. 3 is an explanatory view depicting an example of a counter table. The counter table depicted in FIG. 3 may be the counter table 16 depicted in FIG. 2. The counter table 16 includes a video TS counter 16A, an audio TS counter 16B, a PAT TS counter 16C and a PMT TS counter 16D. The video TS counter 16A stores a video TS count value at present and a video TS count value one second before. The audio TS counter 16B stores an audio TS count value at present and an audio TS count value one second before. The PAT TS counter 16C stores a PAT TS count value at present and a PAT TS count value one second before. The PMT TS counter 16D stores a PMT TS count value at present and a PMT TS count value one second before.

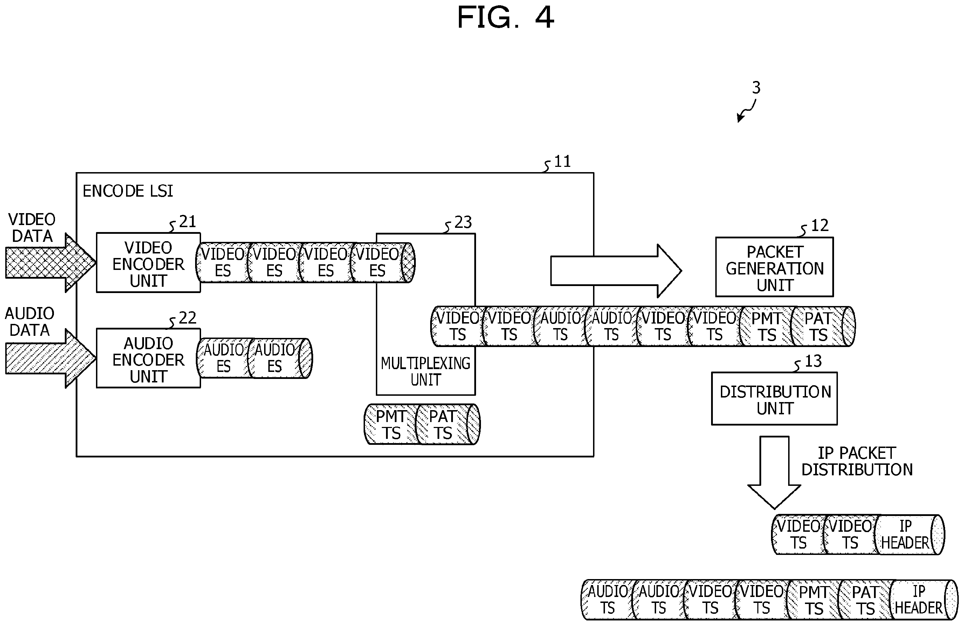

Now, operation of the video distribution system 1 of the present embodiment is described. FIG. 4 is an explanatory view depicting an example of multiplexed data when an encoder device is normal. The encoder device depicted in FIG. 4 may be the encoder device 3 depicted in FIG. 1. The video encoder unit 21 converts video data into a video ES and inputs the video ES to the multiplexing unit 23. The audio encoder unit 22 converts audio data into an audio ES and inputs the audio ES to the multiplexing unit 23. The multiplexing unit 23 converts the video ES into a video TS and converts the audio ES into an audio TS, multiplexes the video TS and the audio TS, and inputs the multiplexed data to the packet generation unit 12. Further, the multiplexing unit 23 inputs a PAT TS and a PMT TS to the packet generation unit 12 after every given period. The packet generation unit 12 adds an IP header to the header part of a TS packet in the multiplexed data and outputs the TS packet to the IP network 7.

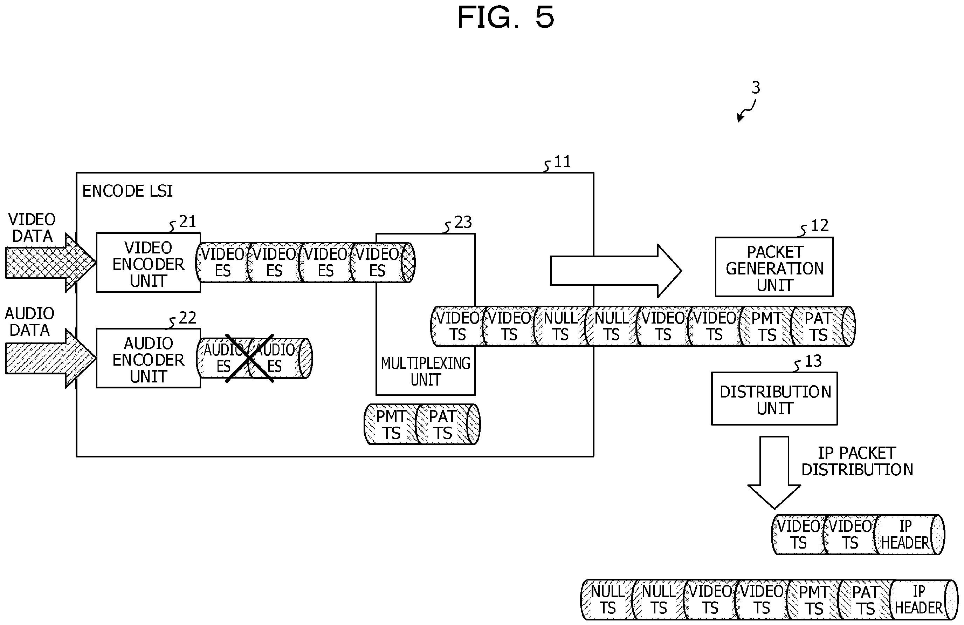

FIG. 5 is an explanatory view depicting an example of multiplexed data when an encoder device is abnormal. The encoder device in FIG. 5 may be the encoder device 3 depicted in FIG. 1. The video encoder unit 21 converts video data into a video ES and inputs the video ES to the multiplexing unit 23. If an abnormality occurs with the audio encoder unit 22, the audio encoder unit 22 fails to input an audio ES to the multiplexing unit 23. As a result, since the multiplexing unit 23 does not receive an input of an audio ES of a set rate from the audio encoder unit 22, it outputs a null TS corresponding to the audio ES that is to originally arrive. The multiplexing unit 23 inputs multiplexed data of a video TS corresponding to the video ES and the null TS to the packet generation unit 12 and inputs a PAT TS and a PMT TS to the packet generation unit 12 after every given period. The packet generation unit 12 adds an IP header to the header part of a TS packet in the multiplexed data and outputs the TS packet to the IP network 7.

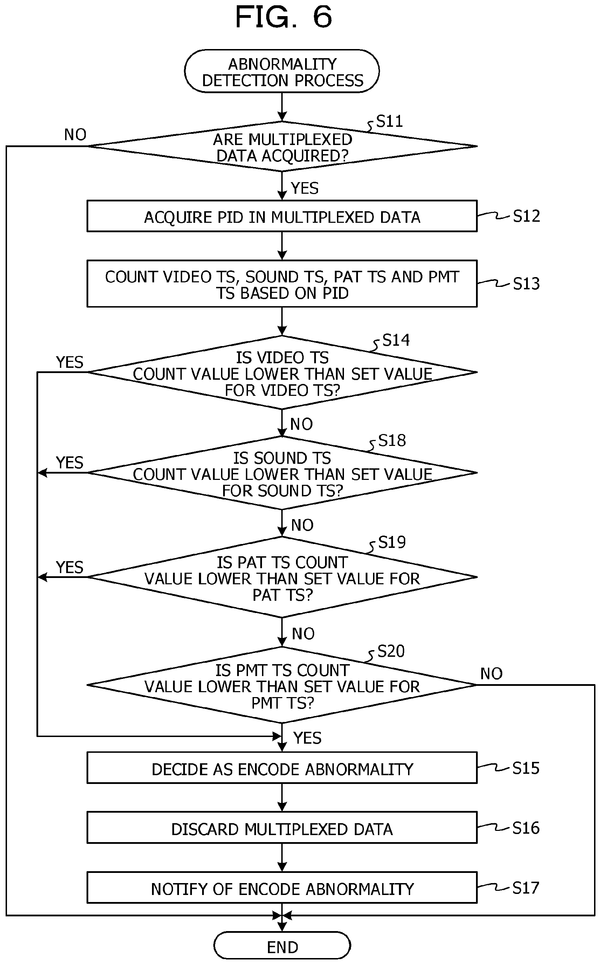

FIG. 6 is a flow chart depicting an example of processing operation of an encoder device relating to an abnormality detection process. The encoder device may be the encoder device 3 depicted in FIG. 1. The TS detection unit 15 decides whether or not multiplexed data is acquired (step S11). If the TS detection unit 15 acquires multiplexed data (affirmative at step S11), it acquires a PID in the multiplexed data (step S12). The TS detection unit 15 counts, based on the PID, a video TS, an audio TS, a PAT TS and a PMT TS from the multiplexed data (step S13) and stores them into the counter table 16.

The abnormality detection unit 17 decides whether or not the count value of the video TS is lower than a set value for the video TS (step S14). It is to noted that the set value for the video TS is a count value obtained by adding a scheduled value of the video TS for one second to the video TS count value one second before.

If the count value of the video TS is lower than the set value for the video TS (affirmative at step S14), the abnormality detection unit 17 decides that the multiplexed data suffers from an encode abnormality (step S15). Then, the discarding unit 13A in the distribution unit 13 discards the multiplexed data (step S16). Further, the notification unit 13B in the distribution unit 13 notifies, after the multiplexed data is discarded, the management terminal 6 of the encode abnormality (step S17), whereafter the processing operation depicted in FIG. 6 is ended.

If the count value of the video TS is not lower than the set value for the video TS (negative at step S14), the abnormality detection unit 17 decides whether or not the count value of the audio TS is lower than the set value for the audio TS (step S18). It is to be noted that the set value for the audio TS is a count value obtained by adding a scheduled value for the audio TS for one second to the audio TS count value one second before. If the count value of the audio TS is lower than the set value for the audio TS (affirmative at step S18), the abnormality detection unit 17 advances the processing to step S15, at which it determines that the multiplexed data suffers from an encode abnormality.

If the count value of the audio TS is not lower than the set value for the audio TS (negative at step S18), the abnormality detection unit 17 decides whether or not the count value of the PAT TS is lower than the set value for the PAT TS (step S19). It is to be noted that the set value for the PAT TS is a count value obtained by adding a scheduled value for the PAT TS for one second to the PAT TS count value one second before. If the count value of the PAT TS is lower than the set value for the PAT TS (affirmative at step S19), the abnormality detection unit 17 advances the processing to step S15, at which it determines that the multiplexed data suffers from an encode abnormality.

If the count value of the PAT TS is not lower than the set value for the PAT TS (negative at step S19), the abnormality detection unit 17 decides whether or not the count value of the PMT TS is lower than the set value for the PMT TS (step S20). It is to be noted that the set value for the PMT TS is a count value obtained by adding a scheduled value for the PMT TS for one second to the PMT TS count value one second before. If the count value of the PMT TS is lower than the set value for the PMT TS (affirmative at step S20), the abnormality detection unit 17 advances the processing to step S15, at which it determines that the multiplexed data suffers from an encode abnormality. If the count value of the PMT TS is not lower than the set value for the PMT TS (negative at step S20), the abnormality detection unit 17 ends the processing operation depicted in FIG. 6.

If the count value of the video TS is lower than the set value of the video TS, the encoder device 3 decides that the multiplexed data suffers from an encode abnormality. As a result, an abnormality of the encoder device 3 side may be identified.

If the count value of the audio TS is lower than the set value for the audio TS, the encoder device 3 decides that the multiplexed data suffers from an encode abnormality. As a result, an abnormality of the encoder device 3 side may be identified.

If the count value of the PAT TS is lower than the set value for the PAT TS, the encoder device 3 decides that the multiplex data suffers from an encode abnormality. As a result, an abnormality of the encoder device 3 side may be identified.

If the count value of the PMT TS is lower than the set value for the PMT TS, the encoder device 3 decides that the multiplex data suffers from an encode abnormality. As a result, an abnormality of the encoder device 3 side may be identified.

The encoder device 3 in the present embodiment detects, based on a PID included in each packet included in acquired multiplexed data, a packet corresponding to video data and/or a packet corresponding to audio data from the multiplexed data. Further, the encoder device 3 detects an abnormality of the encoder depending upon whether or not the number of detected packets corresponding to video data and/or the number of detected packets corresponding to audio data corresponds to the number according to the setting of the encoder. As a result, an abnormality of the encoder device 3 side may be identified. Besides, since an abnormality of the encoder device 3 side may be identified, also an abnormality of the decoder device 4 side may be identified. Further, when a video TS or an audio TS is not outputted, for example, due to an abnormality in encode, the encoder device 3 may identify an encode abnormality rapidly even if the encode abnormality is not of the decoder device 4 side.

The encoder device 3 uses the count value determined from the bit rate and the TS size as the number of packets. As a result, comparison decision of the number of packets of an encoder abnormality is facilitated.

If the encoder device 3 detects an abnormality of the encoder, it discards the multiplexed data acquired from the encoder. As a result, by suppressing outputting of multiplexed data, which is in encoder abnormality, to an opposed apparatus, reduction of communication resources may be anticipated.

If the encoder device 3 detects an abnormality of the encoder, it notifies the management terminal 6 that the encoder is in failure. As a result, the maintenance person may rapidly recognize a failure of the encoder device.

It is to be noted that, while, as data to be used in order to detect an encoder abnormality, for example, a video TS, an audio TS, a PAT TS and a PMT TS are exemplified in the above embodiments, the data are not limited to them, and, for example, a program clock reference (PCR) may be used instead. In this case, since the TS detection unit 15 outputs in a period of, for example, 30 milliseconds with a PCR size of, for example, 12 bytes, one PCR size is equal to or smaller than 184 bytes, namely, fits in one TS packet. Since 1 second/30 milliseconds = 33.3..., for example, since the TS detection unit 15 outputs a PCR 33 times for one second, one PCR becomes one TS packet and the scheduled value of the PCR TS becomes 33. Note that it is assumed that the scheduled value of the PCR TS is stored in the storage unit not depicted. Further, also the size and the period of the PAT, PMT and PCR are exemplified, they are not limited to the exemplified matters and may be set and change suitably.

Further, the respective components of the respective units depicted in the drawings may not necessarily be physically configured in such a manner as depicted in the drawings. For example, particular forms of disintegration and integration of the respective units are not limited to those depicted in the drawings and all or part of them may be configured in a functionally or physically disintegrated or integrated fashion in an arbitrary unit depending upon various loads, use situations and so forth.

Further, the various processing functions performed by the individual apparatus may be executed wholly or at arbitrary part thereof on a central processing unit (CPU) (or a microcomputer such as a micro processing unit (MPU) or a micro controller unit (MCU)). Further, the various processing functions may naturally be executed wholly or at arbitrary part thereof on a program that is analyzed and executed on a CPU (or a microcomputer such as an MPU or an MCU) or on hardware by wired logic.

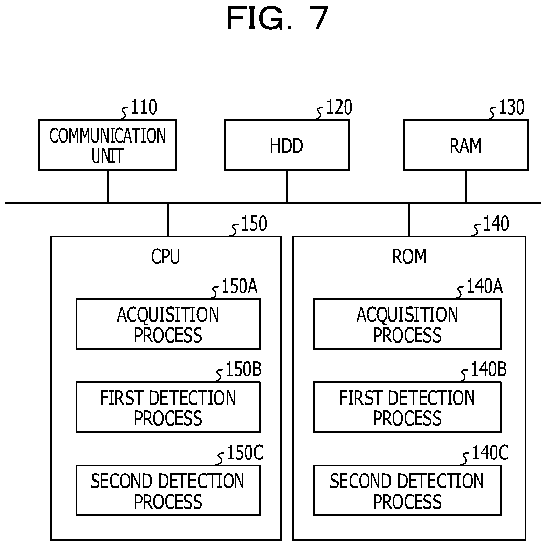

Incidentally, the various processes described hereinabove in connection with the present embodiment may be implemented by a program prepared in advance and executed by a processor such as a CPU in an information processing apparatus. Therefore, in the following, an example of the information processing apparatus that executes a program having functions similar to those of the embodiment described hereinabove is described. FIG. 7 is a block diagram depicting an example of an information processing apparatus that executes an abnormality detection program.

The information processing apparatus 100 that is depicted in FIG. 7 and executes the abnormality detection program includes a communication unit 110, a hard disk drive (HDD) 120, a random access memory (RAM) 130, a read only memory (ROM) 140 and a central processing unit (CPU) 150.

In the ROM 140, the abnormality detection program that demonstrates functions similar to those of the embodiment described hereinabove is stored in advance. The ROM 140 has stored therein an acquisition program 140A, a first detection program 140B and a second detection program 140C as the abnormality detection program. It is to be noted that the abnormality detection program may be recorded not in the ROM 140 but in a computer-readable recording medium in the HDD 120. Alternatively, as the recording medium, a portable recording medium such as a compact disk (CD)-ROM, a digital versatile disk (DVD), or a semiconductor memory such as a universal serial bus (USB) memory may be used.

The CPU 150 reads out the acquisition program 140A from the ROM 140 and functions as an acquisition process 150A. The CPU 150 reads out the first detection program 140B from the ROM 140 and functions as a first detection process 150B. The CPU 150 reads out the second detection program 140C from the ROM 140 and functions as a second detection process 150C.

The CPU 150 acquires multiplexed data from an encoder that multiplexes encoded data obtained by performing an encoding process for an audio and/or a moving picture and outputs the multiplexed encoded data. The CPU 150 detects, based on a packet identifier included in each of packets included in the acquired multiplexed data, a packet corresponding to moving picture data and/or a packet corresponding to audio data from the multiplexed data. The CPU 150 detects an abnormality of the encoder depending upon whether or not the number of detected packets corresponding to moving picture data and/or detected packets corresponding to audio data corresponds to a number according to setting of the encoder. As a result, abnormality of the encoder may be detected.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

### REFERENCE SIGNS LIST

1 Video distribution system
3 Encoder device
11 Encoder LSI
12 Packet generation unit
13 Distribution unit
13A Discarding unit
13B Notification unit
14 Setting unit
15 TS detection unit
17 Abnormality detection unit
21 Video encoder unit
22 Audio encoder unit
23 Multiplexing unit

### CITATION LIST

### [Patent Document]

Japanese Laid-open Patent Publication No. 2006-262406
Japanese Laid-open Patent Publication No. 2007-166129

## Claims

1. A method, performed by a computer, for detecting abnormality of an encoder, the method comprising:
executing, by a processor of the computer, an acquisition process that includes acquiring multiplexed data from the encoder that multiplexes encoded data obtained by performing an encoding process for multimedia data which includes moving picture data and audio data, and outputting the multiplexed encoded data;
executing, by the processor of the computer, a first detection process that includes detecting, based on a packet identifier included in each of packets included in the acquired multiplexed data, at least either one of first packet corresponding to the moving picture data and second packet corresponding to the audio data from the multiplexed data; and
executing, by the processor of the computer, a second detection process that includes detecting an abnormality of the encoder depending upon whether or not a detection number corresponds to a predetermined number according to setting of the encoder, wherein the detection number indicates at least either one of the number of times of the detecting the first packet and the number of times of the detecting the second packet.

2. The method according to claim 1, wherein
the multiplexed data is transmitted to a reception apparatus that receives and performs a decoding process for the multiplexed data.

3. The method according to claim 1, wherein
a value determined from a bit rate and a TS (Transport Stream) size is used as the detection number.

4. The method according to claim 1, wherein
when an abnormality of the encoder is detected, a process for discarding the multiplexed data acquired from the encoder is executed by the computer.

5. The method according to claim 1, further comprising:
executing a notification process that includes issuing, when an abnormality of the encoder is detected, a notification that the encoder is in failure.

6. The method according to claim 1, wherein
the first detection process includes detecting a packet corresponding to control data from the multiplexed data based on a packet identifier included in each of the acquired packets included in the multiplexed data; and
the second detection process includes detecting an abnormality of the encoder depending upon whether or not the number of detected packets corresponding to the control data corresponds to a number according to setting of the encoder.

7. An apparatus for detecting abnormality of an encoder, comprising:
a memory; and
a processor coupled to the memory and configured to
execute an acquisition process that includes acquiring multiplexed data from the encoder that multiplexes encoded data obtained by performing an encoding process for multimedia data which includes moving picture data and audio data, and outputting the multiplexed encoded data;
execute a first detection process that includes detecting, based on a packet identifier included in each of packets included in the acquired multiplexed data, at least either one of first packet corresponding to the moving picture data and second packet corresponding to the audio data from the multiplexed data; and
execute a second detection process that includes detecting an abnormality of the encoder depending upon whether or not a detection number corresponds to a predetermined number according to setting of the encoder, wherein the detection number indicates at least either one of the number of times of the detecting the first packet and the number of times of the detecting the second packet.

8. A non-transitory computer-readable storage medium for storing a program regarding a detection of abnormality of an encoder, the program causing a processor to execute a process, the process comprising:
executing an acquisition process that includes acquiring multiplexed data from the encoder that multiplexes encoded data obtained by performing an encoding process for multimedia data which includes moving picture data and audio data, and outputting the multiplexed encoded data;
executing a first detection process that includes detecting, based on a packet identifier included in each of packets included in the acquired multiplexed data, at least either one of first packet corresponding to the moving picture data and second packet corresponding to the audio data from the multiplexed data; and
executing a second detection process that includes detecting an abnormality of the encoder depending upon whether or not a detection number corresponds to a predetermined number according to setting of the encoder, wherein the detection number indicates at least either one of the number of times of the detecting the first packet and the number of times of the detecting the second packet.
